# EUROPEAN PATENT APPLICATION

(11) **EP 2 767 940 A1**
(43) Date of publication of application: **20.08.2014**
(21) Application number: 14155267.9
(22) Date of filing: 14.02.2014
(51) Int. Cl.: G06Q 10/08, G06Q 30/02

(54) **Inventory management system**

(30) Priority: 14.02.2013 US 201313767351
(71) Applicant: Disney Enterprises, Inc., Burbank, CA 91521 (US)
(72) Inventor: Davies, Cameron, Burbank, CA 91521 (US); Matthews, Mary L., Burbank, CA 91521 (US); Sommer, Steven J., Burbank, CA 91521 (US); Hedges, Jr., James L., Burbank, CA 91521 (US); Denslow, III, Thomas W., Burbank, CA 91521 (US)
(74) Representative: Round, Edward Mark

(57) **Abstract**

System, method, and computer program product to optimize a monetary value of a use of non-content time during a media distribution, by computing an advertisement value of selling an inventory unit to an advertiser, the inventory unit comprising a non-content time slot during the media distribution; computing a promotional value of using the inventory unit to air a promotion for a program during the media distribution, the promotion for the program comprising at least one of a local promotion and a national promotion; and evaluating the advertisement value and the promotional value to identify an opportunity to optimize the monetary value earned from the use of the inventory unit.

## Description

### BACKGROUND

### Field of the Disclosure

Embodiments disclosed herein relate to the field of computer software. More specifically, embodiments disclosed herein relate to computer software that identifies opportunities to increase revenues realized through the use of non-content assets within the business of media distribution.

### Description of the Related Art

Media providers typically manage large pools of non-content inventory, which may include sold advertisements and promotional uses. Traditionally, attempts to shift non-content inventory from one source to another was a manual, time consuming process. For example, decisions as to how to allocate inventory between sales to national advertisers, local advertisers, and promotions are largely fixed in nature, based on affiliate contracts, past practice, and marketplace conditions. A person would have to identify a non-content unit, and conduct an analysis to determine whether there would be more profitable ways to use the non-content time. Given the vast number of annual non-content units, this manually driven process was not suitable, as many opportunities to transfer inventory to higher value opportunities are commonly missed.

### SUMMARY

Embodiments disclosed herein provide a system, method, and computer program product to increase profits realized through a use of non-content time during a media distribution, by computing an advertisement value of selling an inventory unit to an advertiser, the inventory unit comprising a non-content time slot during the media distribution; computing a promotional value of using the inventory unit to air a promotion for a program during the media distribution, the promotion for the program comprising at least one of a local promotion and a national promotion; and evaluating the advertisement value and the promotional value to identify an opportunity to increase a profit earned from the use of the inventory unit.

### BRIEF DESCRIPTION OF THE DRAWINGS

So that the manner in which the above recited aspects are attained and can be understood in detail, a more particular description of embodiments of the disclosure, briefly summarized above, may be had by reference to the appended drawings.

It is to be noted, however, that the appended drawings illustrate only typical embodiments of this disclosure and are therefore not to be considered limiting of its scope, for the disclosure may admit to other equally effective embodiments.
Figure 1 is a block diagram illustrating a system executing an inventory management system, according to one embodiment disclosed herein.
Figure 2 is a flow chart illustrating a method for an inventory management system, according to one embodiment disclosed herein.
Figure 3 is a flow chart illustrating a method to compute the value of selling advertisements, according to one embodiment disclosed herein.
Figure 4 is a flow chart illustrating a method to compute the value of the promotional use of inventory units, according to one embodiment disclosed herein.
Figure 5 is a flow chart illustrating a method to identify exchange opportunities in an inventory management system, according to one embodiment disclosed herein.

### DETAILED DESCRIPTION

Embodiments of the disclosure provide an inventory management system which analyzes non-content assets, or "inventory units," during a media distribution to identify exchange opportunities such that the profits realized from the inventory unit are maximized. As used herein, an "inventory unit" may be defined as a unit of non-content time or space during a media distribution, such as a commercial, advertisement, or promotion. In one embodiment, the inventory unit may be thirty seconds in length. Exemplary media distributions include, but are not limited to, a television show, movie, sporting event, website, mobile application, print media, or a radio show. The media distribution may be transmitted by a content provider, such as a television or radio network, through any number of mediums, including, but not limited to, satellite, cable, broadcast signals, and the Internet.

According to one embodiment, the inventory management system disclosed herein analyzes inventory units to determine their best (and most profitable) use. In some embodiments, the inventory unit may be sold to a national advertiser or a local advertiser, who would air a national promotion or a local promotion, respectively. A national advertisement and a local advertisement, as used herein refer to a commercial advertisement aired during the inventory unit. However, the distribution scope of a national advertisement and a local advertisement may be different. For example, a national television company, such as the ABC Corporation (ABC), provides media content to over 200 local ABC affiliate stations throughout the United States. ABC owns eight of these local affiliates (the ABC-owned stations), while the rest are owned by entities external to ABC. Each local affiliate is provided with a set number of local inventory units to use for advertising sales and promotions, annually. The local inventory units, when combined with the national inventory units retained by ABC as a national distributor, comprise the total number of inventory units in a given year during all ABC programming. Therefore, a national advertisement, purchased and aired by a national (or local) advertiser, is an advertisement aired during an inventory unit on all ABC stations throughout the nation. A local advertisement, however, purchased and aired by a local advertiser, is an advertisement aired during an inventor unit on at least one ABC owned affiliate, but is not aired on at least one other ABC owned affiliate.

Alternatively, an inventory unit may be used to air a promotion for a media distribution, including, but not limited to, a television show, a sporting event, a movie, or the like. As is the case for advertisements, promotions may be national or local. A national promotion, as used herein, refers to inventory units retained by ABC, as a national media distributor, which are displayed on all local ABC affiliates. A local promotion, as used herein, refers to promotions which are displayed on at least one ABC affiliate, but is not displayed on at least one other ABC affiliate. For example, a promotion for a popular show such as ABC's Desperate Housewives may be aired during a national promotion or a local promotion. However, a promotion for the local nightly news may only be aired during a local promotion on the ABC affiliate on which the local nightly news program airs.

The inventory management system disclosed herein manages and, in some embodiments, optimizes the use of inventory units to identify opportunities to exchange one form of inventory unit for another. In one embodiment, the inventory management system focuses on exchange opportunities of the national ABC network as well as the ABC-owned local affiliates. Although ABC is used as an example, embodiments disclosed herein apply equally to all distributors of media, including television, movies, sports, and radio. The inventory management system capitalizes on show popularity, market conditions, inventory availability, and advertising sales price. For example, at certain times during the year, there may be a better pricing advantage for the ABC-owned local affiliate stations than the national ABC network for selling inventory units during a media distribution, such as the 20/20 television show. In these cases, it is advantageous for the national ABC network to transfer their available inventory of inventory units to the ABC-owned local affiliates. Generally, an annual number of inventory units may be determined, with this annual number being allocated between promotions and advertisements based on any number of factors. Whether or not an inventory unit has already been sold to an advertiser or slated for a promotion, that inventory unit may be exchanged in order to maximize value. Therefore, the inventory management system identifies opportunities to make exchanges between any two of: national advertisements, local advertisements, national promotions, and local promotions. Upon identifying the opportunities, the inventory management system may present the opportunities to a user for review and approval.

In the following, reference is made to embodiments of the disclosure. However, it should be understood that the disclosure is not limited to specific described embodiments. Instead, any combination of the following features and elements, whether related to different embodiments or not, is contemplated to implement and practice the disclosure. Furthermore, although embodiments of the disclosure may achieve advantages over other possible solutions and/or over the prior art, whether or not a particular advantage is achieved by a given embodiment is not limiting of the disclosure. Thus, the following aspects, features, embodiments and advantages are merely illustrative and are not considered elements or limitations of the appended claims except where explicitly recited in a claim(s). Likewise, reference to "the invention" shall not be construed as a generalization of any inventive subject matter disclosed herein and shall not be considered to be an element or limitation of the appended claims except where explicitly recited in a claim(s).

As will be appreciated by one skilled in the art, aspects of the present disclosure may be embodied as a system, method or computer program product. Accordingly, aspects of the present disclosure may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present disclosure may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber cable, RF, etc., or any suitable combination of the foregoing.

Computer program code for carrying out operations for aspects of the present disclosure may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present disclosure are described below with reference to flowchart illustrations and/or block diagrams of methods, apparatus (systems) and computer program products according to embodiments of the disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

Embodiments of the disclosure may be provided to end users through a cloud computing infrastructure. Cloud computing generally refers to the provision of scalable computing resources as a service over a network. More formally, cloud computing may be defined as a computing capability that provides an abstraction between the computing resource and its underlying technical architecture (e.g., servers, storage, networks), enabling convenient, on-demand network access to a shared pool of configurable computing resources that can be rapidly provisioned and released with minimal management effort or service provider interaction. Thus, cloud computing allows a user to access virtual computing resources (e.g., storage, data, applications, and even complete virtualized computing systems) in "the cloud," without regard for the underlying physical systems (or locations of those systems) used to provide the computing resources.

Typically, cloud computing resources are provided to a user on a pay-per-use basis, where users are charged only for the computing resources actually used (e.g. an amount of storage space consumed by a user or a number of virtualized systems instantiated by the user). A user can access any of the resources that reside in the cloud at any time, and from anywhere across the Internet. In context of the present disclosure, a user may access applications to optimize sales and marketing or related data available in the cloud. For example, the sales and marketing application could execute on a computing system in the cloud and optimize the use of non-content assets. In such a case, the application could analyze opportunities to maximize profits from advertising and marketing and store the identified opportunities at a storage location in the cloud. Doing so allows a user to access this information from any computing system attached to a network connected to the cloud (e.g., the Internet).

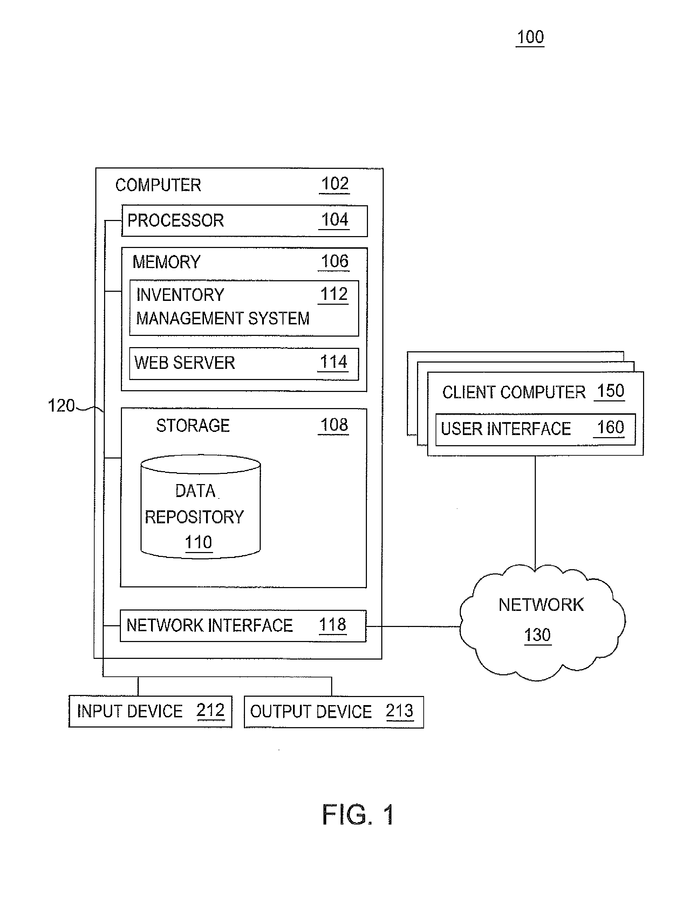

Figure 1 is a block diagram illustrating a networked system 100 for an inventory management system, according to one embodiment disclosed herein. The networked system 100 includes a computer 102. The computer 102 may also be connected to other computers via a network 130. In general, the network 130 may be a telecommunications network and/or a wide area network (WAN). In a particular embodiment, the network 130 is the Internet.

The computer 102 generally includes a processor 104 connected via a bus 120 to a memory 106, a network interface device 118, a storage 108, an input device 122, and an output device 124. The computer 102 is generally under the control of an operating system (not shown). Examples of operating systems include the UNIX operating system, versions of the Microsoft Windows operating system, and distributions of the Linux operating system. (UNIX is a registered trademark of The Open Group in the United States and other countries. Microsoft and Windows are trademarks of Microsoft Corporation in the United States, other countries, or both. Linux is a registered trademark of Linus Torvalds in the United States, other countries, or both.) More generally, any operating system supporting the functions disclosed herein may be used. The processor 104 is included to be representative of a single CPU, multiple CPUs, a single CPU having multiple processing cores, and the like. Similarly, the memory 106 may be a random access memory. While the memory 106 is shown as a single identity, it should be understood that the memory 106 may comprise a plurality of modules, and that the memory 106 may exist at multiple levels, from high speed registers and caches to lower speed but larger DRAM chips. The network interface device 118 may be any type of network communications device allowing the computer 102 to communicate with other computers via the network 130.

The storage 108 may be a persistent storage device. Although the storage 108 is shown as a single unit, the storage 108 may be a combination of fixed and/or removable storage devices, such as fixed disc drives, solid state drives, floppy disc drives, tape drives, removable memory cards or optical storage. The memory 106 and the storage 108 may be part of one virtual address space spanning multiple primary and secondary storage devices.

As shown, the memory 106 contains an inventory management system (IMS) 112, which is an application generally configured to manage and optimize the use of non-content inventory units for a media distribution entity. The IMS 112 analyzes inventory units stored in the data repository 110 to identify opportunities to exchange inventory units in order to maximize the profits realized by the use of the inventory units. The IMS 112, in one embodiment, may execute on data of the ABC national network as well as the local affiliates owned by ABC. A plurality of client computers 150 may access the IMS 112 via a user interface application 160 that connects to the computer via web server 114.

As shown, storage 108 contains the data repository 110, which stores a plurality of data related to the IMS 112. For example, the data repository 110 may store data related to the inventory units, advertisement sales history, pricing information, billing data, advertiser contact information, business rules, and decision models. Although depicted as a database, the 110 may take any form sufficient to store data, including text files, xml data files, and the like.

The input device 122 may be any device for providing input to the computer 102. For example, a keyboard and/or a mouse may be used. The output device 124 may be any device for providing output to a user of the computer 102. For example, the output device 124 may be any conventional display screen or set of speakers. Although shown separately from the input device 122, the output device 124 and input device 122 may be combined. For example, a display screen with an integrated touch-screen may be used.

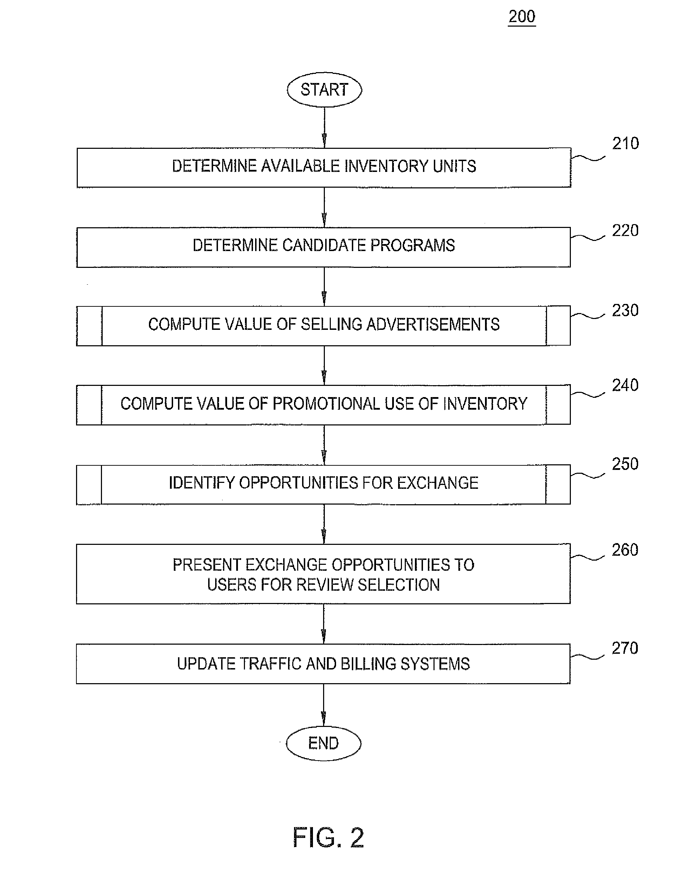

Figure 2 is a flow chart illustrating a method 200 for an inventory management system, according to one embodiment disclosed herein. In one embodiment, the IMS 112 performs the steps of the method 200. Generally, the IMS 112, by executing the steps of the method 200, identifies exchange opportunities for non-content assets (inventory units) during a media distribution such that the inventory units return the greatest value to the media distribution entity. For example, during political elections, the value of local advertisements is higher than normal, and in some cases, it may be more profitable for a national distributor, such as ABC, to move some (or all) of its inventory units to local markets for advertisement sales.

At step 210, the IMS 112 determines the available inventory units. The IMS 112 may perform this step by retrieving a schedule lineup stored in the data repository 110. In one embodiment, the IMS 112 operates on a weekly basis; in such embodiments, the IMS 112 may pull a week's schedule lineup indicating the media content and non-content inventory units scheduled for that week. The IMS 112 may also determine which shows are sold out or may be required in order to meet contractual obligations from previous contracts not fully performed. Based on the information retrieved at step 210, the IMS 112 may identify candidate programs and their corresponding inventory units for transfer at step 220. At step 220, to identify candidate programs, the IMS 112 may run a plurality of analytics based on popularity, season, timing, market pricing, and other factors. In one embodiment, the IMS 112 may identify different tiers of programs, according to popularity and profitability, which may be useful later in the exchange process. For example, the IMS 112 may create three tiers of programs, such as "high," "medium," and "low," and categorize programs into these tiers accordingly. Based on the analytics performed by the IMS 112, the IMS 112 may retrieve candidate programs containing inventory units which would be good candidates for an exchange. In one embodiment, the inventory units identified for exchange may already be scheduled to run a promotion or advertisement.

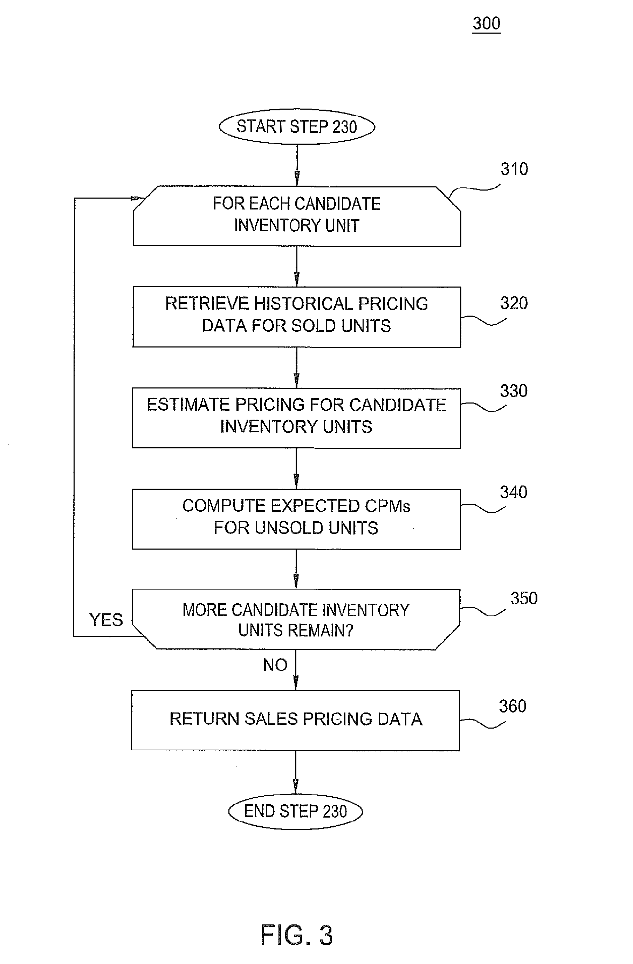

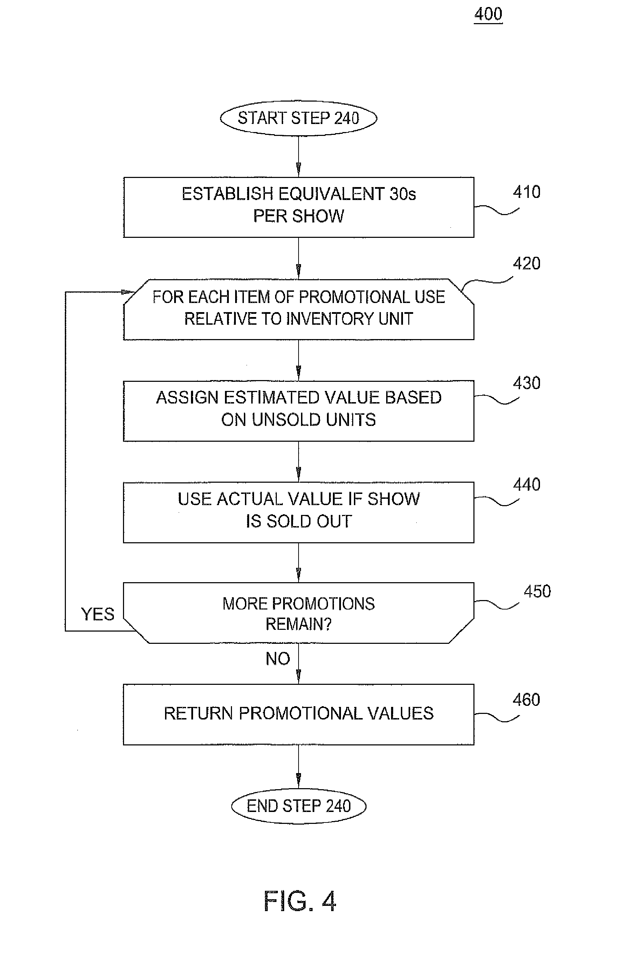

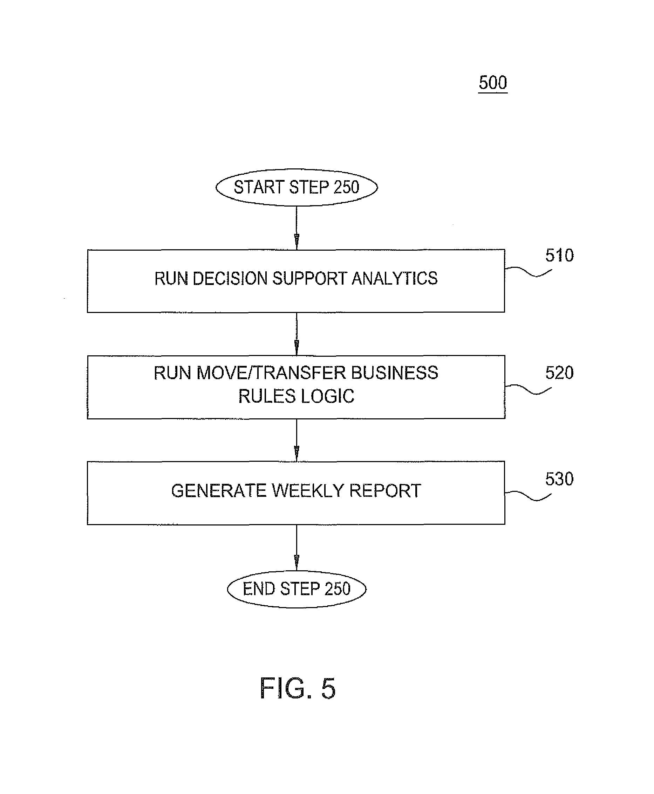

At step 230, described in greater detail with reference to Figure 3, the IMS 112 computes the value of selling advertisements to be played during each of the candidate inventory units. In various embodiments, the IMS 112 uses one or more of sales history, demand data, asset valuation, and a plurality of other market factors to compute the value of selling advertisements for the inventory units. At step 240, described in greater detail with reference to Figure 4, the IMS 112 computes the value of the promotional use of the inventory units which, may be used to air a promotion during the candidate inventory units. Generally, the IMS 112 computes the overall value received by the promotional use of an inventory unit, including value derived from attracting new viewers as well as retaining current viewers. At step 250, described in greater detail with reference to Figure 5, the IMS 112 identifies opportunities for exchange. Generally, the IMS 112 will identify an opportunity for exchange when its analytical routines determine that the inventory unit would be more profitable if exchanged from one of a national promotion, local promotion, national advertisement, or local advertisement, to another.

At step 260, the IMS 112 presents the exchange opportunities to a user for review, which may be later implemented by the user. At step 270, the IMS 112 may update its traffic and billing data stored in the data repository 110 to reflect the exchanges. Since the IMS 112 executes on the system 100 which may be shared by ABC and its owned ABC affiliates, the traffic and billing data of both the ABC network and its owned ABC affiliates may be updated by the IMS 112.

Figure 3 is a flow chart illustrating a method 300 corresponding to step 230 to compute the value of selling advertisements, according to one embodiment disclosed herein. In one embodiment, the IMS 112 may perform the steps of the method 300. The IMS 112 may execute the steps of the method 300 to estimate the value that may be realized by selling a candidate inventory unit to an advertiser, local or national, which may be then compared against other values to determine whether selling the inventory unit to an advertiser, is the most profitable use of the inventory unit. At step 310, the IMS 112 begins executing a loop containing steps 320-350 for each candidate inventory unit identified at step 220. The candidate inventory units are evaluated for both national advertisements as well as local advertisements. The candidate inventory units may or may not have already been committed to air a promotion or an advertisement.

At step 320, the IMS 112 retrieves historical pricing data from the data repository 110. The historical pricing data may indicate a price that was previously paid for a similar inventory unit, taking into account a variety of factors, including, but not limited to time of year, time of day, the media program within which the inventory unit airs, and demand. At step 330, the IMS 112 estimates pricing for the candidate inventory unit based on the historical pricing data. At step 340, the IMS 112 computes the cost per thousand impressions (CPM) for the candidate inventory unit. The CPM helps the IMS 112 determine the cost of the advertisement to attain one thousand viewer impressions. If the CPM exceeds a predefined threshold, the IMS 112 may ultimately determine that the sale of this particular inventory unit as a national or local advertisement does not provide a good return on investment, and would not identify the sale of this candidate inventory unit to advertisers as an opportunity in step 250. At step 350, the IMS 112 determines whether more candidate inventory units remain to be analyzed. If more candidate inventory units remain, the IMS 112 returns to step 320. Otherwise, the IMS 112 proceeds to step 360, where it returns the computed sales pricing data. In one embodiment, the IMS 112 may store the computed values in the data repository 110.

Figure 4 is a flow chart illustrating a method 400 corresponding to step 240 to compute the value of the promotional use of inventory units, according to one embodiment disclosed herein. In some embodiments, the IMS 112 may perform the steps of the method 400. The IMS 112 may execute the steps of the method 400 to determine the value of the promotional use of inventory units, i.e., the use of national and local promotions which may be aired during a given inventory unit. The value of the promotional use of the inventory unit is determined from the perspective of the ABC network. Every promotion aired derives value, as a person who sees the promotion is more likely to watch the promoted show, and the network is then able to sell that viewership to an advertiser. Additionally a viewer who watches the program (and the promotion) is also likely to become a repeat viewer, bringing further value to the network. Generally, the IMS 112 will conduct an analysis based on a number of attributes, including, but not limited to, the date/time of an inventory unit, the amount of time between the airing of the promotion during the inventory unit and the airing of the program being promoted, the air time of the promoted program compared to the time of the inventory unit, and a number of times the promotion has been aired.

At step 410, the IMS 112 determines the number of inventory units per media distribution that are available for promotional (national and local) usage. Information pertaining to the promotional use of inventory units may be stored in the data repository 110. The number of inventory units per media distribution may be determined by a user and stored in the data repository 110. At step 420, the IMS 112 begins executing a loop containing steps 430-450 for each item of promotional use relative to each inventory unit. At step 430, the IMS 112 assigns an estimated value to the promotion based on unsold units. At step 440, the IMS 112 assigns an actual value if the program is sold out. At step 450, the IMS 112 determines whether additional promotions remain to be analyzed in light of each inventory unit. If more promotions remain, the IMS 112 returns to step 420. Otherwise, the IMS 112 proceeds to step 460, where it returns the value of the promotional use of inventory units. In one embodiment, the IMS 112 may store the computed values in the data repository 110.

Figure 5 is a flow chart illustrating a method 500 corresponding to step 250 to identify exchange opportunities in an inventory management system, according to one embodiment disclosed herein. The steps of the method 500 may be performed by the IMS 112. At step 510, the IMS 112 runs decision support analytics. This step includes analyzing the data from steps 230 and 240 to optimize the inventory units. Additionally, the value of existing advertisements or promotions in the inventory units must be retrieved by the IMS 112. For example, the IMS 112 may have determined at step 230 that an inventory unit could be sold to a national advertiser for a very large profit. Accordingly, the IMS 112 must also determine what should be done with an existing advertisement or promotion scheduled in the inventory unit, if one exists, or whether a swap must be completed at step 520. The types of exchanges that may be identified by the IMS 112 include, but are not limited to:
(i) Swapping a national (ABC network) promotion for a national advertisement;
(ii) Swapping a national advertisement for a national promotion;
(iii) Swapping a local (on ABC-owned local affiliate stations) promotion for a local advertisement;
(iv) Swapping a local advertisement for a local promotion;
(v) Swapping a national promotion for a local advertisement, with affiliates not owned by ABC airing a national promotion;
(vi) Swapping a national promotion for a local advertisement, with affiliates not owned by ABC being sold to a barter company;
(vii) Swapping a national promotion for a local advertisement, with the affiliates not owned by ABC being offered the inventory unit (those not participating would be sold to a barter company);
(viii) Swapping a national promotion for a local advertisement, with the affiliates not owned by ABC being offered the inventory unit (those not participating would receive a national promotion);
(ix) Swapping a national advertisement for a local advertisement with affiliates not owned by ABC airing a national promotion;
(x) Swapping a national advertisement for a local advertisement with the inventory unit of affiliates not owned by ABC being sold to a barter company;
(xi) Swapping a national advertisement to for a local advertisement, with affiliates not owned by ABC being offered the inventory unit for purchase (inventory units of affiliates not owned by ABC who do not participate are sold to barter company);
(xii) Swapping a national advertisement for a local advertisement, with affiliates not owned by ABC being offered the inventory unit for purchase (inventory units of affiliates not owned by ABC who do not purchase receive a national promotion);
(xiv) Swapping a local advertisement for a national advertisement with an offer to buy local inventory units from affiliates not owned by ABC (inventory units of affiliates not owned by ABC who do not purchase receive a national promotion); and
(xv) Swapping a local promotion for a national promotion.

Although the aforementioned exchange opportunities discuss advertisements and promotions, in some embodiments, no such item has been actually scheduled in an inventory unit. In these scenarios, the underlying inventory unit may have been scheduled to air one of the national promotion, local promotion, national advertisement, and local advertisement. Furthermore, it is these underlying inventory units that would be swapped (or exchanged) in these scenarios. At step 520, the IMS 112 runs a move/transfer business rules logic to ensure that the exchange comports with all applicable regulations and policies. At step 530, the IMS 112 generates a weekly report including the proposed exchange information for review by a user.

Therefore, embodiments disclosed herein automate the reporting and processes whereby exchanged opportunities are identified, thereby increasing visibility and consistency in the decision making process. Furthermore, complex mathematical predictive and optimization algorithms designed to better predict, execute, and learn from opportunities and past decisions are implemented. Recent systematic and econometric modeling advances related to the end impact of promotions and portfolio optimization sciences are utilized in order to make better decisions. Additionally, a web interface may be provided to allow the capture and reporting of opportunities by a user, as well as to allow a user to provide their own influences and weighting to a particular exchange opportunity.

The flowchart and block diagrams in the Figures illustrate the architecture, functionality, and operation of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order or out of order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

While the foregoing is directed to embodiments of the present disclosure, other and further embodiments of the disclosure may be devised without departing from the basic scope thereof, and the scope thereof is determined by the claims that follow.

## Claims

1. A computer-implemented method to optimize a monetary value of a use of non-content assets during a media distribution, comprising:
computing an advertisement value of selling an inventory unit to an advertiser, wherein the inventory unit comprises a non-content asset during the media distribution;
computing a promotional value of using the inventory unit to air a promotion for a program during the media distribution, wherein the promotion for the program comprises at least one of a local promotion and a national promotion; and
evaluating, by operation of one or more computer processors, the advertisement value and the promotional value to identify an opportunity to increase the monetary value earned from the use of the inventory unit.

2. The method of claim 1, wherein computing the advertisement value comprises at least one of:
computing a national sale value of selling the inventory unit to a national advertiser; and
computing a local sale value of selling the inventory unit to a local advertiser.

3. The method of claim 2, wherein the national sale value and the local sale value are based on:
(i) an actual price of previously sold inventory units;
(ii) an advertising demand for the inventory unit;
(iii) an expected sales price for the inventory unit; and
(iv) a cost per impression for the inventory unit.

4. The method of claim 1, wherein computing the promotional value comprises at least one of:
computing a national promotional value of using the inventory unit to air the national promotion; and
computing a local promotional value of using the inventory unit to air the local promotion.

5. The method of claim 4, wherein the national promotional value and the local promotional value are based on an expected increased in viewership of the program as a result of airing the promotion, wherein the expected increase in viewership is based on at least one of:
(i) a number of times the promotions has previously been aired;
(ii) a date and time of the inventory unit;
(iii) a length of the promotion;
(iv) a number of times an average viewer has previously seen the promotion; and
(v) a total number of available inventory units.

6. The method of claim 1, wherein a national advertisement is scheduled during the inventory unit, wherein the opportunity comprises at least one of:
(i) replacing the national advertisement with a local advertisement;
(ii) replacing the national advertisement with the promotion;
(iii) replacing the national advertisement on a local station owned by a distribution entity with a different advertisement and replacing the national advertisement on a local station not owned by the distribution entity with the national promotion;
(iv) replacing the national advertisement on the local station owned by the distribution entity with the local advertisement and selling the inventory unit on the local station not owned by the distribution entity to a third party; and
(v) replacing the national advertisement on the local station owned by the distribution entity with the local advertisement and offering the inventory unit for sale on the local station not owned by the distribution entity, wherein the a national promotion is scheduled in the inventory unit on the local station not owned by the distribution entity if the inventory unit is not purchased.

7. The method of claim 1, wherein a local advertisement is scheduled during the inventory unit, wherein the opportunity comprises at least one of:
(i) replacing the local advertisement with a national advertisement;
(ii) replacing the local advertisement with the national promotion; and
(iii) replacing, on a local station owned by a distribution entity, the local advertisement with the promotion.

8. The method of claim 1, wherein a national promotion is scheduled during the inventory unit, wherein the opportunity comprises at least one of:
(i) replacing the national promotion with a national advertisement;
(ii) replacing the national promotion with a local advertisement;
(iii) replacing the national promotion with a local advertisement on a local station owned by a distribution entity and selling the inventory unit previously occupied by the national promotion on a local station not owned by the distribution entity to a third party; and
(iv) replacing the national promotion with a local advertisement on a local station owned by the distribution entity and offering the inventory unit for sale on the local station not owned by the distribution entity, wherein the national promotion is remains scheduled during the inventory unit on the local station not owned by the distribution entity by the national promotion if the inventory unit is not purchased.

9. The method of claim 1, wherein a local promotion is scheduled during the inventory unit, wherein the opportunity comprises at least one of:
(i) replacing the local promotion with a local advertisement; and
(iii) replacing, on a local station owned by a distribution entity, the local promotion with a national promotion.

10. A computer program product to optimize a monetary value of a use of non-content assets during a media distribution, the computer program product comprising:
a computer-readable storage medium having computer-readable program code embodied therewith, the computer-readable program code comprising:
computer-readable program code configured to compute an advertisement value of selling an inventory unit to an advertiser, wherein the inventory unit comprises a non-content asset during the media distribution;
computer-readable program code configured to compute a promotional value of using the inventory unit to air a promotion for a program during the media distribution, wherein the promotion for the program comprises at least one of a local promotion and a national promotion; and
computer-readable program code configured to evaluate the advertisement value and the promotional value to identify an opportunity to increase the monetary value earned from the use of the inventory unit.

11. The computer program product of claim 10, wherein a national advertisement is scheduled during the inventory unit, wherein the opportunity comprises at least one of:
(i) replacing the national advertisement with a local advertisement;
(ii) replacing the national advertisement with the promotion;
(iii) replacing the national advertisement on a local station owned by a distribution entity with a different advertisement and replacing the national advertisement on a local station not owned by the distribution entity with the national promotion;
(iv) replacing the national advertisement on the local station owned by the distribution entity with the local advertisement and selling the inventory unit on the local station not owned by the distribution entity to a third party; and
(v) replacing the national advertisement on the local station owned by the distribution entity with the local advertisement and offering the inventory unit for sale on the local station not owned by the distribution entity, wherein the a national promotion is scheduled in the inventory unit on the local station not owned by the distribution entity if the inventory unit is not purchased.

12. The computer program product of claim 10, wherein a local advertisement is scheduled during the inventory unit, wherein the opportunity comprises at least one of:
(i) replacing the local advertisement with a national advertisement;
(ii) replacing the local advertisement with the national promotion; and
(iii) replacing, on a local station owned by a distribution entity, the local advertisement with the promotion.

13. The computer program product of claim 10, wherein a national promotion is scheduled during the inventory unit, wherein the opportunity comprises at least one of:
(i) replacing the national promotion with a national advertisement;
(ii) replacing the national promotion with a local advertisement;
(iii) replacing the national promotion with a local advertisement on a local station owned by a distribution entity and selling the inventory unit previously occupied by the national promotion on a local station not owned by the distribution entity to a third party; and
(iv) replacing the national promotion with a local advertisement on a local station owned by the distribution entity and offering the inventory unit for sale on the local station not owned by the distribution entity, wherein the national promotion is remains scheduled during the inventory unit on the local station not owned by the distribution entity by the national promotion if the inventory unit is not purchased.

14. The computer program product of claim 10, wherein a local promotion is scheduled during the inventory unit, wherein the opportunity comprises at least one of:
(i) replacing the local promotion with a local advertisement; and
(iii) replacing, on a local station owned by a distribution entity, the local promotion with a national promotion.

15. A system, comprising:
one or more computer processors; and
a memory containing a program, which, when executed by the one or more computer processors, performs an operation to a monetary value of a use of non-programming time during a broadcast, the operation comprising:
computing an advertisement value of selling an inventory unit to an advertiser, wherein the inventory unit comprises a non-content asset during the media distribution;
computing a promotional value of using the inventory unit to air a promotion for a program during the media distribution, wherein the promotion for the program comprises at least one of a local promotion and a national promotion; and
evaluating the advertisement value and the promotional value to identify an opportunity to increase the monetary value earned from the use of the inventory unit.
